# FASCICULE DE BREVET EUROPEEN

(11) **EP 2 961 507 B1**
(45) Date de publication et mention de la délivrance du brevet: **24.04.2019**
(21) Numéro de dépôt: 14707382.9
(22) Date de dépôt: 28.02.2014
(51) Int. Cl.: B01D 17/02

(54) **DISPOSITIF DE SÉPARATION GRAVITAIRE DE LIQUIDES NON MISCIBLES DE DENSITÉS DIFFÉRENTES**
VORRICHTUNG ZUR SCHWERKRAFTTRENNUNG VON UNMISCHBAREN FLÜSSIGKEITEN MIT UNTERSCHIEDLICHER DICHTE
DEVICE FOR GRAVITY SEPARATION OF IMMISCIBLE LIQUIDS HAVING DIFFERENT DENSITIES

(30) Priorité: 01.03.2013 FR 1351835
(43) Date de publication de la demande: 06.01.2016
(73) Titulaire: Ylec Consultants, 38700 La Tronche (FR)
(72) Inventeur: LECOFFRE, Yves, F-38000 Grenoble (FR); MAJ, Guillaume, F-38400 Saint Martin D'heres (FR)
(74) Mandataire: Casalonga
(86) Numéro de dépôt international: PCT/EP2014/053914
(87) Numéro de publication internationale: WO 2014/131874

(56) Documents cités:
- US-A- 1 920 468
- US-A- 2 730 190
- US-A- 3 362 791
- US-A- 3 553 940
- US-A- 3 649 516
- US-A- 4 876 079
- US-A- 4 915 823
- US-B2- 7 364 661

## Description

La présente invention concerne le domaine de la séparation de liquides non miscibles de densités différentes.

Elle peut s'appliquer en particulier aux problèmes de la séparation de l'huile et de l'eau dans les émulsions pétrolières, que ce soit dans le domaine de la production pétrolière, du raffinage ou de la dépollution. Elle peut s'appliquer également à la séparation des graisses dans le domaine de l'habitat, à l'extraction de gaz libres dans un ou des liquides, au traitement des eaux de pluie ou à la production d'huile d'olive. En particulier, elle peut s'appliquer à la séparation des phases d'une émulsion qui est constituée d'un liquide majoritaire, dit liquide porteur, dans lequel sont présentes des gouttes d'un liquide secondaire.

Pour réaliser cette opération, il est connu d'utiliser des séparateurs gravitaires dans lesquels on introduit l'émulsion à une extrémité d'un réservoir de telle sorte qu'après un temps de séjour suffisant, les gouttes du liquide secondaire de l'émulsion montent ou descendent selon que leur densité est inférieure ou supérieure à celle du liquide porteur. On crée ainsi en extrémité du réservoir deux couches superposées des deux liquides, le plus léger au-dessus et le plus lourd au-dessous. Selon une exécution, le liquide le plus lourd est pompé à la partie inférieure du réservoir et le liquide le plus léger se déverse par dessus un bord supérieur d'une cloison aménagée sur une certaine hauteur du réservoir à partir du fond de ce dernier.

Dans de tels séparateurs gravitaires, la séparation des liquides peut ne pas être parfaite car la position de l'interface entre les liquides, par rapport au bord supérieur de ladite cloison d'un séparateur déterminé, dépend de la différence entre les densités des liquides.

Le brevet US 4 876 079 décrit un séparateur dans lequel un réservoir comprend une chambre de décantation remplie des liquides à séparer amenés sous pression, le liquide le plus lourd étant évacué par un conduit de sortie branché à la partie supérieure de cette chambre, et une seconde chambre communiquant avec la première chambre, le liquide le plus léger étant évacué par un conduit de sortie branché à la partie inférieure de cette seconde chambre. Les pressions dans les conduits de sortie sont arrangées pour qu'aucun gaz n'apparaisse dans la première chambre et pour que le gaz dans la seconde chambre à la pression de saturation du second liquide.

Le brevet US 3 362 791 décrit un séparateur de liquides dans lequel le liquide le plus lourd est évacué par deux conduits en série séparés par une chambre intermédiaire à pression d'air reliée à un conduit plongeant dans le liquide d'une colonne de régulation réglable verticalement. Il apparaît qu'un tel séparateur est compliqué et qu'il présente un fonctionnement douteux. Le brevet US3553940 décrit un séparateur de liquides avec un déversoir pour la phase légère dans la première chambre. Le bord supérieur de la cloison de séparation des chambres n'atteint pas l'enveloppe du séparateur pour pouvoir maintenir des pressions différentes entre les chambres.

La présente invention a pour but d'améliorer le fonctionnement des séparateurs gravitaires et de proposer un séparateur gravitaire beaucoup plus efficace et beaucoup plus simple.

Il est proposé un dispositif de séparation gravitaire de liquides non miscibles de densités différentes d'une émulsion contenant au moins deux liquides, qui comprend un réservoir à l'intérieur duquel l'émulsion est amenée par au moins une entrée et peut s'écouler, de façon que les liquides se séparent au moins en partie en migrant l'un au-dessus de l'autre sous l'effet de la gravité, et comprenant, dans une zone du réservoir dans laquelle les liquides sont au moins en partie séparés, des moyens d'extraction du liquide le plus léger et du liquide le plus lourd vers des sorties correspondantes.

Le réservoir comprend une cloison de séparation délimitant une première chambre dans laquelle débouche ladite entrée et dans laquelle se produit la séparation des liquides et une seconde chambre, cette cloison de séparation aménageant un passage inférieur de communication entre ces chambres de façon que le liquide le plus lourd s'écoule depuis la première chambre dans la seconde chambre.

Lesdits moyens d'extraction comprennent un premier déversoir situé dans la première chambre et présentant un bord supérieur de déversement du liquide le plus léger vers une première sortie du réservoir et un second déversoir situé dans la seconde chambre et présentant un bord supérieur de déversement du liquide le plus lourd vers une seconde sortie du réservoir, le bord supérieur du premier déversoir et le bord supérieur du second déversoir étant situés au-dessus du bord supérieur du passage inférieur de communication et le bord supérieur du second déversoir étant situé au-dessous du bord supérieur du premier déversoir, de telle sorte que les surfaces libres des liquides dans lesdites chambres déterminent des espaces internes du réservoir séparés par ladite cloison de séparation.

Le dispositif de séparation comprend un moyen de réglage ou de régulation de la pression / dépression à l'intérieur d'au moins l'un desdits espaces internes du réservoir, de sorte que la position de l'interface entre le liquide lourd et le liquide léger dans ladite première chambre se situe entre le bord supérieur dudit passage inférieur de communication et le bord supérieur dudit premier déversoir et comprend des moyens pour détecter les pressions à l'intérieur desdits espaces internes, le moyen de réglage ou de régulation étant soumis à la valeur de la différence entre ces pressions.

Le dispositif de séparation peut comprendre un moyen de réglage ou de régulation des pressions / dépressions à l'intérieur desdits espaces internes du réservoir.

Le dispositif de séparation peut comprendre un moyen de détection du niveau de l'interface entre les liquides dans la première chambre et dans lequel le moyen de réglage ou de régulation est soumis au signal délivré par ce moyen de détection par rapport à une référence de niveau.

Le dispositif de séparation peut comprendre un moyen de détection dans au moins l'une desdites sorties, de l'un des liquides dans l'autre et le moyen de réglage ou de régulation peut être soumis au signal délivré par ce moyen de détection.

La sortie du liquide correspondant audit espace à pression réglée ou régulée peut être munie d'un moyen de réglage ou de régulation de débit, soumis à un signal délivré par un moyen de détection du niveau de la surface libre de ce liquide par rapport à une référence de niveau.

Le dispositif de séparation peut comprendre au moins un moyen de réglage de débit dans au moins l'une desdites sorties, soumis à un signal délivré par un moyen de détection du niveau de la surface libre du liquide dans le déversoir correspondant par rapport à une référence de niveau.

Ledit moyen de réglage ou de régulation peut être soumis aux valeurs des densités desdits liquides à séparer.

Des dispositifs de séparation de liquides vont maintenant être décrits à titre d'exemples non limitatifs, illustrés par le dessin sur lequel :
- la figure 1 représente une coupe longitudinale verticale d'un dispositif longitudinal de séparation ;
- la figure 2 représente une coupe transversale verticale selon II-II du dispositif de séparation de la figure 1 ;
- la figure 3 représente le dispositif de séparation de la figure 1 complété par un équipement de régulation ;
- la figure 4 représente le dispositif de séparation de la figure 1 complété par un autre équipement de régulation ;
- la figure 5 représente une coupe verticale d'un dispositif vertical de séparation ; et
- la figure 6 représente une coupe verticale d'un autre dispositif vertical de séparation.

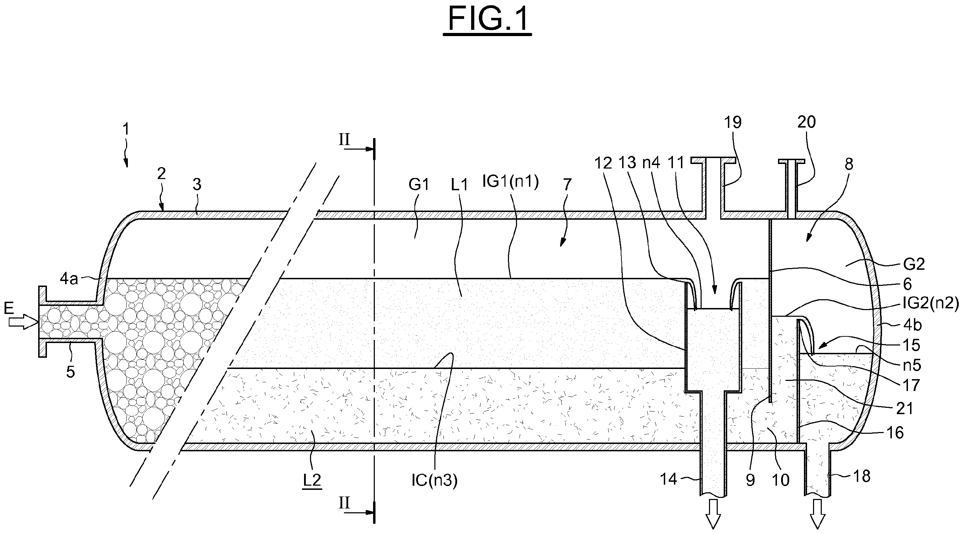

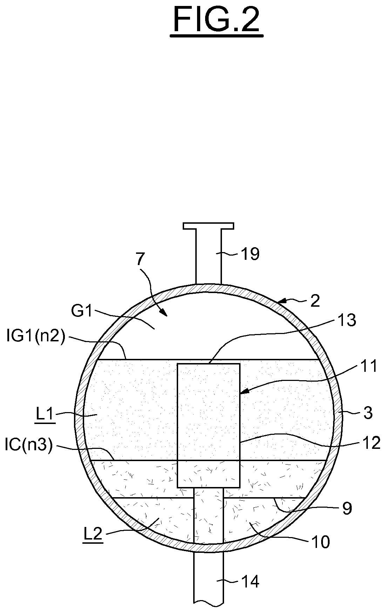

Comme illustré sur les figures 1 et 2, un dispositif de séparation gravitaire 1 comprend un réservoir allongé horizontal fermé 2, qui comprend une paroi périphérique allongée 3, par exemple cylindrique, dont l'axe est horizontal, et des parois d'extrémité 4a et 4b.

Sur la paroi d'extrémité 4a du réservoir allongé 2 est branché, par exemple axialement, un conduit d'entrée 5.

Le réservoir allongé 2 est équipé d'une cloison intérieure radiale de séparation 6 formée par au moins une plaque, placée par exemple verticalement à grande distance de la paroi d'extrémité 4a et à faible distance de la paroi d'extrémité 4b et qui délimite, à l'intérieur du réservoir, une première chambre 7 dans laquelle débouche l'entrée 5 et une seconde chambre 8. La première chambre 7 s'étend entre la paroi d'extrémité 4a et la cloison de séparation 6 et la seconde chambre 8 s'étend entre la paroi d'extrémité 4b et la cloison de séparation 6.

La cloison de séparation 6 présente un bord inférieur horizontal 9 qui s'étend à faible distance de la partie inférieure de la paroi allongée cylindrique 3 de façon à aménager un passage inférieur 10 de communication entre les chambres 7 et 8.

Le bord périphérique de la cloison de séparation 6, adjacent à la paroi allongée cylindrique 3, est fixé à cette dernière de façon étanche.

Le réservoir allongé 2 est équipé d'un déversoir 11 qui est situé dans la chambre 7, à faible distance de la cloison de séparation 6, et qui comprend un entonnoir 12 à axe vertical dont le bord supérieur 13 s'étend dans un plan horizontal et est placé à un niveau situé à distance au-dessous de la partie supérieure du réservoir 3 et situé au-dessus du bord supérieur 9 du passage de communication 10. Le déversoir pourrait être formé par une paroi transversale délimitant, avec la cloison de séparation 6, un entonnoir.

Sur la partie inférieure de l'entonnoir 12 est branché un conduit vertical de sortie 14 qui s'étend vers le bas et qui traverse, de façon étanche, la partie inférieure de la paroi allongée cylindrique 3.

Le réservoir allongé 2 est également équipé d'un déversoir 15 qui comprend une paroi radiale 16 qui est situé dans la chambre 8, qui s'étend à partir de la partie inférieure de la paroi allongée cylindrique 3 et qui présente un bord supérieur horizontal 17 placé à un niveau situé au-dessus du bord supérieur 9 du passage de communication 10 et situé de préférence au-dessous du bord supérieur 13 du déversoir 11.

Le bord périphérique de la paroi 16, adjacent à la paroi allongée cylindrique 3, est fixé à cette dernière de façon étanche.

Sur la partie inférieure de la paroi allongée cylindrique 3 et entre la paroi d'extrémité 4b et la paroi radiale 16, est branché un conduit de sortie 18 qui s'étend par exemple vers le bas.

Sur la partie supérieure de la paroi allongée cylindrique 3 est branché un conduit de sortie 19 qui s'étend vers le haut et débouche dans la chambre 7 et un conduit de sortie 20 qui s'étend vers le haut et débouche dans la chambre 8.

Ainsi, d'une manière générale, en supposant que les conduits supérieurs 19 et 20 soient reliés à l'atmosphère et en supposant qu'une émulsion E, contenant deux liquides L1 et L2 non miscibles de densités différentes dont la différence convienne, par exemple de l'eau et de l'huile, est introduite dans le réservoir 2 par son entrée 5, l'écoulement dans le réservoir 2 se produit de la manière suivante.

L'émulsion E s'écoule en direction de la cloison de séparation 6. Une paroi présentant éventuellement des trous pourrait être prévue en face de l'entrée 5 afin de dévier vers le bas le jet d'émulsion.

Au cours de cet écoulement dans la chambre 7, les liquides L1 et L2 se séparent en migrant l'un au-dessus de l'autre sous l'effet de la gravité.

Dans la première chambre 7, le liquide L1 le plus léger se place au-dessus du liquide L2 le plus lourd de telle sorte qu'une interface IC entre les liquides L1 et L2 est établie dans la zone ou partie de la première chambre 7 située du côté de et adjacente à la paroi de séparation 6. En fonctionnement normal et souhaité, le niveau n3 de l'interface IC entre les liquides L1 et L2 se situe à un niveau intermédiaire entre le bord supérieur 9 du passage de communication 10 et le bord supérieur 13 de l'entonnoir 12 du déversoir 11.

Le liquide léger L1 se déverse à l'intérieur de l'entonnoir 12 du déversoir 11 en passant par dessus son bord supérieur 13 et est évacué par la sortie 14.

Le liquide lourd L2 s'écoule au travers du passage de communication 10 dans la seconde chambre 8, remplit l'espace 21 entre la cloison intérieure 6 et la paroi 16 du déversoir 15 formé entre la paroi d'extrémité 4b et la paroi 16, se déverse au-dessus du bord supérieur 17 de la paroi 16 et est évacué par la sortie 18.

Est ainsi établie une surface libre de liquide IG1 dans la première chambre 7, située légèrement au-dessus du bord supérieur 13 de l'entonnoir 12 du déversoir 11, de telle sorte qu'il existe un espace interne de gaz G1 au-dessus de cette surface libre IG1.

Est également établie une surface libre de liquide IG2 dans la seconde chambre 8, située légèrement au-dessus du bord supérieur 17 de la paroi 16 du déversoir 15, de telle sorte qu'il existe un espace interne de gaz G2 au-dessus de cette surface libre IG2, le niveau n1 de la surface libre IG1 étant préférentiellement situé au-dessus du niveau n2 de la surface libre IG2. Les espaces internes G1 et G2 sont isolés ou séparés de manière étanche l'un par rapport à l'autre grâce à l'existence de la cloison de séparation 6.

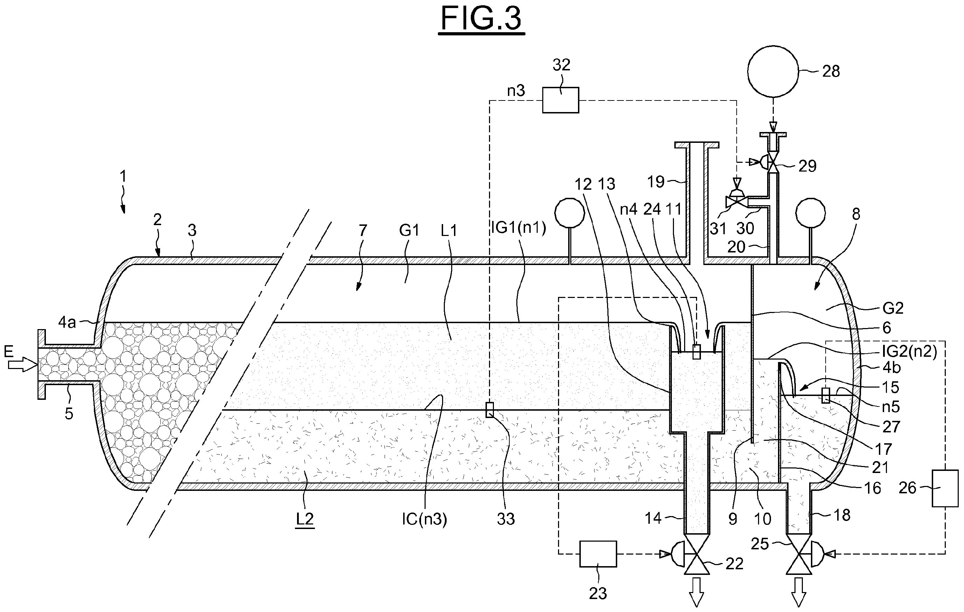

Comme illustré sur la figure 3, le dispositif de séparation 1 des figures 1 et 2 peut être équipé des organes suivants.

Une électrovanne 22 est montée sur le conduit de sortie 14 et réglée ou régulée par un circuit électronique de pilotage 23 soumis au signal d'un détecteur 24 du niveau de fluide n4 à l'intérieur de l'entonnoir 12 du déversoir 11 et programmé de façon que ce niveau n4 soit maintenu sensiblement à un niveau de référence souhaité situé au-dessous du niveau n1 de la surface libre IG1, préférentiellement au-dessous du bord de déversement 13.

Une électrovanne 25 est montée sur le conduit de sortie 18 et réglée ou régulée par un circuit électronique de pilotage 26 soumis au signal d'un détecteur 27 du niveau de fluide n5 à l'intérieur de l'entonnoir 12 du déversoir 11 et programmé de façon que ce niveau n5 soit maintenu sensiblement à un niveau de référence souhaité situé au-dessous du niveau n2 de la surface libre IG2, préférentiellement au-dessous du niveau du bord de déversement 17.

Le conduit supérieur 20 est relié à une source de pression et/ou de dépression 28. Une électrovanne 29 est montée sur le conduit supérieur 20 entre le réservoir 2 et la source de pression 28. Entre le réservoir 2 et l'électrovanne 29, le conduit supérieur 20 est muni d'un conduit latéral 30 sur lequel est montée une électrovanne 31.

L'électrovanne 29 et l'électrovanne 31 sont réglées ou régulées par l'intermédiaire d'un circuit électronique de contrôle 32, soumis au signal délivré par un détecteur 33 du niveau n3 de l'interface IC et programmé de façon que ce niveau n3 soit maintenu sensiblement à un niveau de référence souhaité entre le bord supérieur 9 du passage de communication 10 et le bord supérieur 13 de l'entonnoir 12 du déversoir 11, malgré des variations de la différence entre les densités des liquides L1 et L2, en faisant varier la pression P2 à l'intérieur de l'espace interne G2 par rapport à la pression régnant dans l'espace interne G1.

Selon un exemple de fonctionnement, on suppose que le conduit supérieur 19 relié à l'espace interne G1 est relié à l'atmosphère ou constitue une évacuation des gaz pouvant s'échapper de l'émulsion E dans l'espace interne G1 dans lequel des variations de pression peuvent éventuellement apparaître. Le conduit 14 peut être à écoulement libre vers le bas, l'électrovanne 22 étant ouverte.

Dans un premier cas, la source 28 reliée au conduit supérieur 20 est une source de pression supérieure à la pression atmosphérique régnant dans l'espace interne G1, en particulier un compresseur ou un ballon sous pression. Un fonctionnement peut alors être le suivant.

On suppose que les densités des liquides L1 et L2, les niveaux des seuils de déversement 13 et 17 et la pression imposée dans l'espace interne G2 au travers de l'électrovanne 29 sont tels que l'interface IC est à un niveau souhaité n3R entre le bord supérieur 9 du passage 10 et le bord de déversement 13, par exemple à mi-hauteur.

Si par exemple l'une des densités des liquides L1 et L2 varie de telle sorte que l'interface IC se déplace vers le bas jusqu'à un niveau jugé excessif, le circuit électronique de contrôle 32, sous le contrôle du détecteur 33, pilote l'électrovanne 29 de façon à faire augmenter la pression dans l'espace interne G2 afin de faire remonter l'interface IC jusqu'audit niveau souhaité n3R.

Si par exemple l'une des densités des liquides L1 et L2 varie de telle sorte que l'interface IC se déplace vers le haut jusqu'à un niveau jugé excessif, le circuit électronique de contrôle 32, sous le contrôle du détecteur 33, pilote l'électrovanne d'échappement 31 de façon à faire baisser la pression dans l'espace interne G2 afin de faire redescendre l'interface IC jusqu'audit niveau souhaité n3R.

Dans un autre cas, la source 28 reliée au conduit supérieur 20 est une source de pression inférieure à la pression atmosphérique régnant dans l'espace interne G1, par exemple une pompe à vide. Un fonctionnement peut alors être le suivant.

On suppose que les densités des liquides L1 et L2, les niveaux des seuils de déversement 13 et 17 et la dépression imposée dans l'espace interne G2 au travers de l'électrovanne 29 sont tels que l'interface IC est à un niveau n3 souhaité entre le bord supérieur 9 du passage 10 et le bord de déversement 13, par exemple à mi-hauteur.

Si par exemple l'une des densités des liquides L1 et L2 varie de telle sorte que l'interface IC se déplace vers le bas jusqu'à un niveau jugé excessif, le circuit électronique de contrôle 32, sous le contrôle du détecteur 33, pilote l'électrovanne d'échappement 31 de façon à faire réduire la dépression dans l'espace interne G2 afin de faire monter l'interface IC jusqu'audit niveau souhaité n3R.

Si par exemple l'une des densités des liquides L1 et L2 varie de telle sorte que l'interface IC se déplace vers le haut jusqu'à un niveau jugé excessif, le circuit électronique de contrôle 32, sous le contrôle du détecteur 33, pilote l'électrovanne 29 de façon à faire augmenter la dépression dans l'espace interne G2 afin de faire redescendre l'interface IC jusqu'audit niveau souhaité n3R.

Encore dans un autre cas, la conduite 20 pourrait être reliée à une source de pression et une source de dépression. L'activation de ces sources de pression / dépression et l'activation des électrovannes 29 et 31 seraient alors contrôlées par le circuit électronique de façon à maintenir le niveau n3 de l'interface IC sensiblement à un niveau souhaité en faisant varier la pression à l'intérieur de l'espace interne G2 par rapport à la pression à l'intérieur de l'espace interne G1, dans un sens adapté.

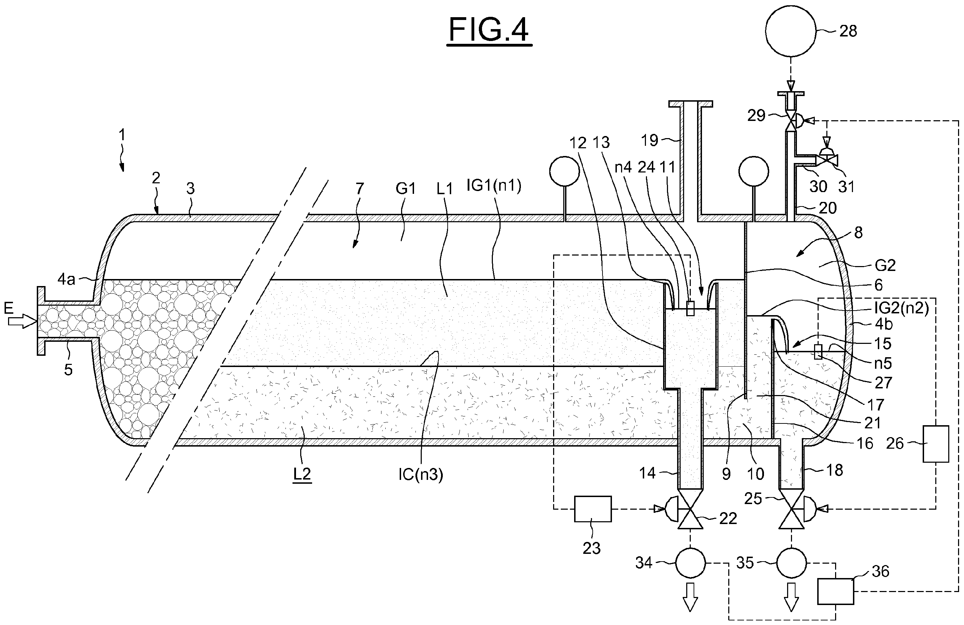

Selon une autre variante de réalisation illustrée sur la figure 4, le circuit électronique 32 et le détecteur de niveau n3 sont supprimés.

La conduite de sortie 14 est équipée d'un détecteur de pollution 34 permettant de détecter la présence de liquide L2 dans le liquide L1 et la conduite de sortie 18 est équipée d'un détecteur de pollution 35 permettant de détecter la présence de liquide L1 dans le liquide L2. Ces détecteurs 34 et 35 seront choisis en fonction des liquides L1 et L2 et pourront être de type optique ou électrique (conductif ou capacitif).

L'électrovanne 29 et l'électrovanne 31 sont réglées ou régulées par l'intermédiaire d'un circuit électronique de contrôle 36, soumis aux détecteurs 34 et 36. On suppose que 28 est une source de pression supérieure à la pression atmosphérique.

Si le détecteur 34 délivre un signal de présence ou correspondant à une présence excessive de liquide L2 dans le liquide L1, le circuit électronique de contrôle 36 ferme l'électrovanne 29 et ouvre l'électrovanne 31 de façon à réduire la pression dans l'espace interne G2 par rapport à la pression à l'intérieur de l'espace interne G1 pour faire baisser le niveau n3 de l'interface IC.

Au contraire, si le détecteur 35 délivre un signal de présence ou correspondant à une présence excessive de liquide L1 dans le liquide L2, le circuit électronique de contrôle 36 ferme l'électrovanne 31 et ouvre l'électrovanne 29 de façon à augmenter la pression dans l'espace interne G2 par rapport à la pression à l'intérieur de l'espace interne G1 pour faire monter le niveau n3 de l'interface IC.

Selon une variante de réalisation, les détecteurs de pollution 34 et 35 pourraient être remplacés par des capteurs de densités des liquides s'écoulant dans les conduites de sortie 14 et 18. Les signaux délivrés par ces capteurs seraient alors délivrés au circuit électronique 36 qui serait programmé pour régler ou réguler les électrovannes 29 et 31 en fonction d'un abaque mémorisé de correspondance notamment entre le niveau n3 de l'interface IC et le rapport dl/d2 entre la densité dl du liquide L1 et la densité d2 du liquide L2 et les positions relatives des bords de déversement 13 et 17 et éventuellement des débits des liquides L1 et L2.

Selon une variante de réalisation, à la fois les détecteurs 34 et 35 et les capteurs de densité ci-dessus pourraient être prévus. Les signaux délivrés par ces quatre détecteurs seraient alors délivrés au circuit électronique 36 qui serait programmé pour régler ou réguler les électrovannes 29 et 31 en combinant les fonctionnements correspondants décrits ci-dessus.

Selon encore une autre variante de réalisation, les densités d1 et d2 des liquides L1 et L2 pourraient être mesurées par un appareillage extérieur, en continu ou de façon séquentielle, et les résultats seraient fournis au circuit électronique 36 en vue des réglages ou régulations des électrovannes 29 et 31 comme décrit ci-dessus.

Selon une autre variante de réalisation, le déversoir 15 formé par la paroi 16, placé dans la seconde chambre 8, pourrait être supprimé. Dans ce cas, un niveau équivalent au bord de déversement 17 du déversoir 15 serait remplacé par le niveau n2 de la surface du liquide dans la seconde chambre 8, résultant du réglage ou de la régulation de l'électrovanne 25 sous l'effet du circuit électronique 25 soumis au détecteur de niveau 27 en relation avec un niveau de référence souhaité.

Les dispositions décrites ci-dessus en référence aux figures 3 et 4, relativement à la conduite de sortie 20 reliée à l'espace interne G2, pourraient être transposées à la conduite de sortie 19 reliée à l'espace interne G1. Néanmoins, les déplacements du niveau n3 de l'interface IC se produiraient en sens inverse. Dans le cas où l'émulsion E produirait un gaz dans l'espace interne G1, seule une électrovanne 29 réglée ou régulée pourrait être placée sur la conduite 19 d'évacuation de ces gaz produits.

Selon une variante de réalisation, à la fois les conduits supérieurs 19 et 20 pourraient être reliés à des sources de pression / dépression par l'intermédiaire d'électrovannes. Dans ce cas, un circuit électronique de contrôle programmé règle ou régule ces électrovannes de façon à faire éventuellement varier la différence entre les pressions dans les espaces internes G1 et G2 afin que le niveau de l'interface IC s'établisse à un niveau souhaité n3R.

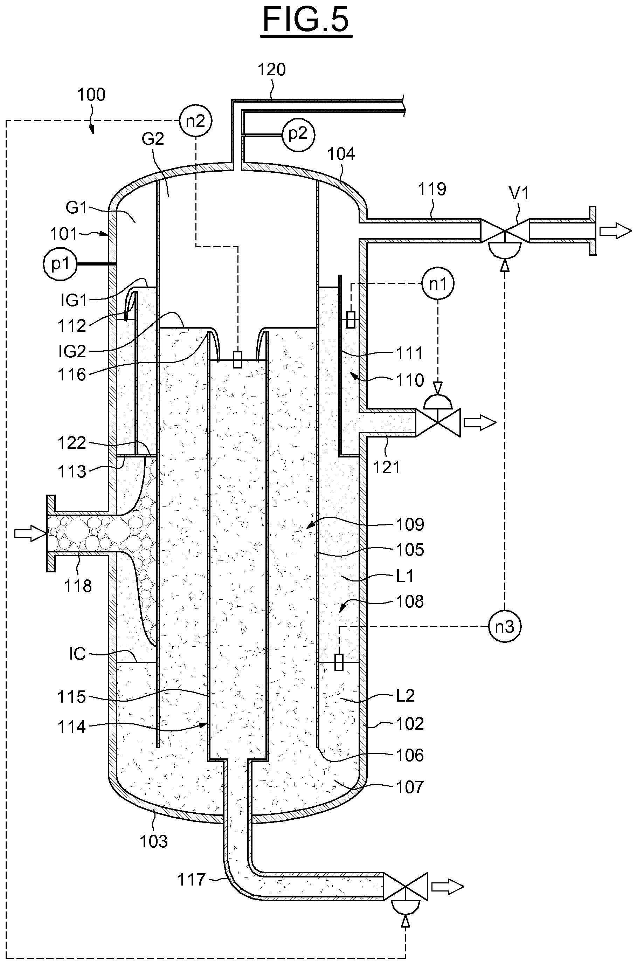

Comme illustré sur la figure 5, un autre dispositif de séparation 100 comprend un réservoir allongé vertical fermé 101 qui comprend une paroi périphérique 102, par exemple cylindrique, dont l'axe est vertical, et des parois d'extrémité inférieure et supérieure 103 et 104.

Le réservoir 101 comprend une cloison verticale cylindrique 105 dont l'extrémité supérieure est fixée de façon étanche à la paroi d'extrémité supérieure 104 et dont le bord inférieur 106 est situé à faible distance de la paroi d'extrémité inférieure 103 de façon à aménager un passage de communication 107. La cloison de séparation 105 délimite une première chambre 108 et une seconde chambre 109 qui communiquent par le passage de communication 107. La première chambre 108 s'étend entre la paroi périphérique 102 et la cloison de séparation 105 et la seconde chambre s'étend à l'intérieur de la cloison de séparation 105.

Dans la première chambre 108 est aménagé un déversoir 110 qui comprend une paroi cylindrique 111 qui s'étend entre la paroi périphérique 102 et la cloison de séparation 105, dont le bord supérieur 112 est situé à distance de la paroi d'extrémité supérieure 104 et dont l'extrémité inférieure est reliée de façon étanche à la paroi périphérique 102 par une couronne radiale 113. Selon l'exemple, la paroi cylindrique 111 est située sur une partie de la moitié supérieure de la première chambre 108.

Dans la seconde chambre 109 est aménagé un déversoir 114 qui comprend un conduit cylindrique vertical 115 situé à distance de la paroi de séparation 105, dont le bord supérieur 116 est situé à distance de la paroi d'extrémité supérieure 104 et à un niveau de préférence inférieur au niveau du bord supérieur 112 du déversoir 110 et dont l'extrémité inférieure est prolongée vers le bas par un conduit de sortie 117 qui traverse la paroi d'extrémité inférieure 103 du réservoir 101.

Sur la paroi périphérique 102 du réservoir 101 est branché un conduit d'entrée 118 qui débouche dans la première chambre 108 entre le bord inférieur 106 de la cloison de séparation 105 et la couronne 113 du déversoir 110.

Sur la partie supérieure du réservoir 101 sont branchés des conduits supérieurs 119 et 120 qui débouchent respectivement dans les chambres 108 et 109 à distance au-dessus des bords supérieurs 112 et 116 des déversoirs 110 et 114.

Sur la paroi périphérique 102 du réservoir 101 est branché un conduit de sortie 121 qui débouche dans le déversoir 110 au-dessous de son bord supérieur 112.

Ainsi, d'une manière générale, en supposant que les conduits supérieurs 119 et 120 soient reliés à l'atmosphère et en supposant qu'une émulsion E, contenant deux liquides L1 et L2 non miscibles de densités différentes dont la différence convienne, par exemple de l'eau et de l'huile, est introduite dans le réservoir 101 par son entrée 118, l'écoulement dans le réservoir 101 se produit de la manière suivante.

L'émulsion E s'écoule dans l'espace entre la paroi périphérique 102 et la cloison de séparation 105. Ce faisant, les liquides L1 et L2 se séparent en migrant l'un au-dessus de l'autre sous l'effet de la gravité. Pour éviter que l'émulsion E ne remonte trop haut et atteigne le bord de déversement 112, on peut prévoir une portion de couronne 122 joignant la paroi 111 du déversoir 110 et la cloison de séparation 105 et située du côté de l'entrée 118 et s'étendant par exemple sur la moitié de la périphérie.

Dans la première chambre 108, le liquide L1 le plus léger se place au-dessus du liquide L2 le plus lourd de telle sorte qu'une interface IC entre les liquides L1 et L2 est établie. En fonctionnement normal et souhaité, le niveau n3 de l'interface IC se situe à un niveau intermédiaire entre le bord supérieur 106 du passage de communication 107 et le bord supérieur 112 du déversoir 110.

Le liquide léger L1 se déverse à l'intérieur du déversoir 110 en passant par-dessus son bord supérieur 112 et est évacué par la sortie 121.

Le liquide lourd L2 s'écoule au travers du passage de communication 107 dans la seconde chambre 109, remplit l'espace entre la cloison de séparation 105 et le conduit 115 du déversoir 114, se déverse au-dessus du bord supérieur 116 du conduit 115 et est évacué par la sortie 117.

Est ainsi établie une surface libre de liquide IG1 dans la première chambre 108, située légèrement au-dessus du bord supérieur 112 de la paroi 111 du déversoir 110, de telle sorte qu'il existe un espace interne de gaz G1 au-dessus de cette surface libre IG1.

Est également établie une surface libre de liquide IG2 dans la seconde chambre 109, située légèrement au-dessus du bord supérieur 116 du conduit 115 du déversoir 114, de telle sorte qu'il existe un espace interne de gaz G2 au-dessus de cette surface libre IG2, le niveau n1 de la surface libre IG1 étant préférentiellement au-dessus du niveau n2 de la surface libre IG2.

Les espaces internes G1 et G2 sont isolés ou séparés de manière étanche l'un par rapport à l'autre grâce à l'existence de la cloison de séparation 105.

Comparant le dispositif de séparation 100 et le dispositif de séparation 1 décrit en référence à la figure 1, on peut préciser que l'entrée 118 est équivalente à l'entrée 5, que la sortie 121 est équivalente à la sortie 14, que la sortie 117 est équivalente à la sortie 18, que la sortie 119 est équivalente à la sortie 19 et que la sortie 120 est équivalente à la sortie 20.

Afin de régler ou réguler le niveau n3 de l'interface IC entre les liquides L1 et L2 dans la première chambre 108 en réglant ou régulant les pressions dans les espaces interne G1 et/ou G2, le dispositif de séparation 100 peut être équipé, de façon équivalente, des organes équipant le dispositif de séparation 1 tels qu'ils ont été décrits précédemment en référence aux figures 3 et 4.

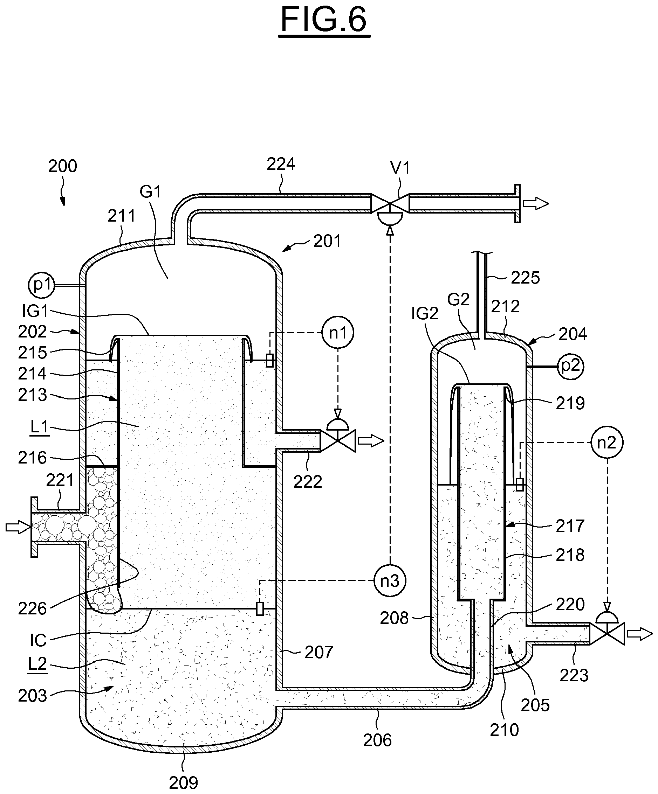

Comme illustré sur la figure 6, un autre dispositif de séparation 200 comprend un réservoir fermé 201 qui comprend une première enceinte 202 qui délimite une première chambre 203 et une seconde enceinte 204 qui délimite une seconde chambre 205. Ces enceintes 202 et 204 sont placées l'une à côté de l'autre et leurs parties inférieures sont reliées par un conduit horizontal de communication 206.

Telles que représentées, les enceintes 202 et 204 comprennent des parois périphériques cylindriques verticales 207 et 208, des parois d'extrémité inférieure 209 et 210 et deux parois d'extrémité supérieure 211 et 212. Ainsi, les parois cylindriques verticales 207 et 208, notamment et substantiellement, forment une cloison de séparation séparant les chambres 203 et 205 et aménageant un passage de communication formé par le conduit de communication 206. Selon une variante de réalisation, les enceintes 202 et 204 pourraient être accolées et présenter une cloison commune de séparation aménageant un passage inférieur de communication comprenant éventuellement un conduit.

Dans la première chambre 203 est aménagé un déversoir 213 qui comprend une paroi cylindrique 214 dont le bord supérieur 215 est situé à distance de la paroi d'extrémité supérieure 211 et dont l'extrémité inférieure est reliée de façon étanche à la paroi périphérique 207 par une couronne radiale 216. Selon l'exemple, la paroi cylindrique 111 est située sur une partie de la moitié supérieure de la chambre 203.

Dans la seconde chambre 205 est aménagé un déversoir 217 qui comprend un conduit cylindrique vertical 218 dont le bord supérieur 219 est situé à distance de la paroi d'extrémité supérieure 212 et préférentiellement à un niveau inférieur au niveau du bord supérieur 215 du déversoir 213 et dont l'extrémité inférieure est prolongée vers le bas par un conduit 220 rejoignant le conduit de communication 206 au travers de la paroi d'extrémité inférieure 210.

Sur la paroi périphérique 207 de l'enceinte 202 est branché un conduit d'entrée 221 qui débouche dans la première chambre 203 à une hauteur située entre le branchement du conduit de communication 206 et la couronne 216 du déversoir 213.

Sur la paroi périphérique 207 de l'enceinte 202 est branché un conduit de sortie 222 qui débouche dans le déversoir 213 au-dessous de son bord supérieur 215.

Sur la paroi périphérique 208 de l'enceinte 204 est branché un conduit de sortie 223 qui débouche dans la parie inférieure de la chambre 205 à l'extérieur du déversoir 217 et au-dessous du bord supérieur 219 de ce déversoir 217.

Sur les parties supérieures des enceintes 202 et 204 sont branchés des conduits supérieurs 224 et 225 qui débouchent respectivement dans les chambres 203 et 205 à distance au-dessus des bords supérieurs 215 et 219 des déversoirs 213 et 217.

Ainsi, d'une manière générale, en supposant que les conduits supérieurs 224 et 225 soient reliés à l'atmosphère et en supposant qu'une émulsion E, contenant deux liquides L1 et L2 non miscibles de densités différentes dont la différence convienne, par exemple de l'eau et de l'huile, est introduite dans l'enceinte 202 du réservoir 201 par son entrée 221, l'écoulement dans le réservoir 201 se produit de la manière suivante.

L'émulsion E s'écoule dans la première chambre 203. Ce faisant, les liquides L1 et L2 se séparent en migrant l'un au-dessus de l'autre sous l'effet de la gravité. Pour éviter que l'émulsion E ne remonte, on peut prévoir une portion cylindrique de paroi 226 située en face de l'entrée 221 et dont l'extrémité supérieure joint la couronne 216.

Dans la première chambre 203, le liquide L1 le plus léger se place au-dessus du liquide L2 le plus lourd de telle sorte qu'une interface IC entre les liquides L1 et L2 est établie. En fonctionnement normal et souhaité, le niveau n3 de l'interface IC se situe à un niveau intermédiaire entre le branchement du conduit de communication 206 et le bord supérieur 215 du déversoir 213.

Le liquide léger L1 se déverse à l'intérieur du déversoir 213 en passant par-dessus son bord supérieur 215 et est évacué par la sortie 222.

Le liquide lourd L2 s'écoule au travers du conduit de communication 206 vers la seconde chambre 205, remplit le conduit 217, se déverse au-dessus du bord supérieur 219 du conduit 217 et est évacué par la sortie 223.

Est ainsi établie une surface libre de liquide IG1 dans la première chambre 203, située légèrement au-dessus du bord supérieur 215 de la paroi 214 du déversoir 213, de telle sorte qu'il existe un espace interne de gaz G1 au-dessus de cette surface libre IG1.

Est également établie une surface libre de liquide IG2 dans la seconde chambre 205, située légèrement au-dessus du bord supérieur 219 du conduit 218 du déversoir 217, de telle sorte qu'il existe un espace interne de gaz G2 au-dessus de cette surface libre IG2, le niveau n1 de la surface libre IG1 étant préférentiellement au-dessus du niveau n2 de la surface libre IG2.

Les espaces internes G1 et G2 sont isolés ou séparés de manière étanche l'un par rapport à l'autre grâce à l'existence des deux enceintes 202 et 204 formant substantiellement une cloison de séparation.

Comparant le dispositif de séparation 200 et le dispositif de séparation 1 décrit en référence à la figure 1, on peut préciser que l'entrée 221 est équivalente à l'entrée 5, que la sortie 222 est équivalente à la sortie 14, que la sortie 223 est équivalente à la sortie 18, que la sortie 224 est équivalente à la sortie 19 et que la sortie 225 est équivalente à la sortie 20.

Afin de régler ou réguler le niveau n3 de l'interface IC entre les liquides L1 et L2 dans la première chambre 203 en réglant ou régulant les pressions dans les espaces interne G1 et/ou G2, le dispositif de séparation 200 peut être équipé, de façon équivalente, des organes équipant le dispositif de séparation 1 tels qu'ils ont été décrits précédemment en référence aux figures 3 et 4.

Selon une variante de réalisation, les électrovannes 22 et 26 précitées pourraient être remplacées par des vannes à actionnement manuel qu'un utilisateur pourrait régler pour placer les niveaux n4 et n5 à des niveaux souhaités en procédant à des relevés de ces derniers.

De même, selon une variante de réalisation, les électrovannes 29 et 31 précitées pourraient être remplacées par des vannes à actionnement manuel qu'un utilisateur pourrait régler pour placer le niveau n3 de l'interface IC à un niveau souhaité en procédant à des relevés de ce dernier.

La présente invention ne se limite pas aux exemples décrits ci-dessus. Bien des variantes de réalisation et de fonctionnement sont possibles sans sortir du cadre de l'invention.

## Revendications

1. Dispositif de séparation gravitaire de liquides non miscibles de densités différentes d'une émulsion contenant au moins deux liquides, comprenant un réservoir fermé à l'intérieur duquel l'émulsion est amenée par au moins une entrée et peut s'écouler, de façon que les liquides se séparent au moins en partie en migrant l'un au-dessus de l'autre sous l'effet de la gravité, et comprenant, dans une zone du réservoir dans laquelle les liquides sont au moins en partie séparés, des moyens d'extraction du liquide le plus léger et du liquide le plus lourd vers des sorties correspondantes ;
dans lequel le réservoir (2, 101, 201) comprend une cloison de séparation (6, 105, 207-208) délimitant une première chambre (7, 108, 203) dans laquelle débouche ladite entrée et dans laquelle se produit la séparation des liquides et une seconde chambre (8, 109, 205), cette cloison de séparation aménageant un passage inférieur de communication (10, 107, 206) entre ces chambres, de façon que le liquide le plus lourd s'écoule depuis la première chambre dans la seconde chambre ;
dans lequel les moyens d'extraction comprennent un premier déversoir (11) situé dans la première chambre et présentant un bord supérieur (13, 112, 215) de déversement du liquide le plus léger vers une première sortie (14, 121, 222) du réservoir, et un second déversoir (15) situé dans la seconde chambre et présentant un bord supérieur (17, 116, 219) de déversement du liquide le plus lourd vers une seconde sortie (18, 117, 223) du réservoir, le bord supérieur du premier déversoir et le bord supérieur du second déversoir étant situés au-dessus du bord supérieur (9) du passage inférieur de communication et le bord supérieur du second déversoir étant situé au-dessous du bord supérieur du premier déversoir, de telle sorte que les surfaces libres (IG1, IG2) des liquides dans lesdites chambres déterminent des espaces internes (G1, G2) du réservoir séparés par ladite cloison de séparation (6, 105, 207-208) ;
comprenant un moyen de réglage ou de régulation (28) de la pression / dépression à l'intérieur d'au moins l'un desdits espaces internes (G1, G2) du réservoir, de sorte que la position de l'interface entre le liquide lourd et le liquide léger dans ladite première chambre se situe entre le bord supérieur (9) dudit passage inférieur de communication (10) et le bord supérieur (13) dudit premier déversoir (11) ;
et comprenant des moyens pour détecter les pressions à l'intérieur desdits espaces internes, le moyen de réglage ou de régulation étant soumis à la valeur de la différence entre ces pressions.

2. Dispositif selon la revendication 1, comprenant un moyen de réglage ou de régulation des pressions / dépressions à l'intérieur desdits espaces internes du réservoir.

3. Dispositif selon l'une des revendications 1 et 2, comprenant un moyen de détection (33) du niveau de l'interface (IC) entre les liquides dans la première chambre et dans lequel le moyen de réglage ou de régulation est soumis au signal délivré par ce moyen de détection par rapport à une référence de niveau.

4. Dispositif selon l'une des revendications 1 ou 2, comprenant un moyen de détection (34, 35) dans au moins l'une desdites sorties, de l'un des liquides dans l'autre et dans lequel le moyen de réglage ou de régulation est soumis au signal délivré par ce moyen de détection.

5. Dispositif selon l'une quelconque des revendications précédentes, dans lequel la sortie du liquide correspondant audit espace à pression réglée ou régulée est munie d'un moyen de réglage ou de régulation de débit (22, 25), soumis à un signal délivré par un moyen de détection du niveau de la surface libre de ce liquide par rapport à une référence de niveau.

6. Dispositif selon l'une quelconque des revendications précédentes, comprenant au moins un moyen de réglage de débit dans au moins l'une desdites sorties, soumis à un signal délivré par un moyen de détection du niveau de la surface libre du liquide dans le déversoir correspondant par rapport à une référence de niveau.

7. Dispositif selon l'une quelconque des revendications précédentes, dans lequel ledit moyen de réglage ou de régulation (28) est soumis aux valeurs des densités desdits liquides à séparer.

## Patentansprüche

1. Vorrichtung zur Schwerkrafttrennung nicht mischbarer Flüssigkeiten unterschiedlicher Dichten einer mindestens zwei Flüssigkeiten enthaltenden Emulsion, die einen geschlossenen Behälter enthält, in dessen Inneres die Emulsion über mindestens einen Eingang gebracht wird und fließen kann, so dass die Flüssigkeiten sich zumindest zum Teil trennen, indem die eine unter der Wirkung der Schwerkraft über die andere wandert, und die in einem Bereich des Behälters, in dem die Flüssigkeiten zumindest zum Teil getrennt sind, Einrichtungen zur Entnahme der leichteren Flüssigkeit und der schwereren Flüssigkeit zu entsprechenden Ausgängen enthält;
wobei der Behälter (2, 101, 201) eine Trennwand (6, 105, 207-208) enthält, die eine erste Kammer (7, 108, 203), in die der Eingang mündet und in der die Trennung der Flüssigkeiten stattfindet, und eine zweite Kammer (8, 109, 205) begrenzt, wobei diese Trennwand einen unteren Verbindungsdurchgang (10, 107, 206) zwischen diesen Kammern einrichtet, so dass die schwerere Flüssigkeit von der ersten Kammer in die zweite Kammer fließt;
wobei die Entnahmeeinrichtungen einen ersten Überlauf (11), der sich in der ersten Kammer befindet und einen oberen Rand (13, 112, 215) zum Ableiten der leichteren Flüssigkeit zu einem ersten Ausgang (14, 121, 222) des Behälters enthält, und einen zweiten Überlauf (15) enthält, der sich in der zweiten Kammer befindet und einen oberen Rand (17, 116, 219) zum Ableiten der schwereren Flüssigkeit zu einem zweiten Ausgang (18, 117, 223) des Behälters enthält, wobei der obere Rand des ersten Überlaufs und der obere Rand des zweiten Überlaufs sich oberhalb des oberen Rands (9) des unteren Verbindungsdurchgangs befinden, und der obere Rand des zweiten Überlaufs sich unterhalb des oberen Rands des ersten Überlaufs befindet, so dass die freien Flächen (IG1, IG2) der Flüssigkeiten in den Kammern innere Räume (G1, G2) des Behälters bestimmen, die von der Trennwand (6, 105, 207-208) getrennt werden; die eine Einstell- oder Regelungseinrichtung (28) des Drucks / Unterdrucks im Inneren mindestens eines der inneren Räume (G1, G2) des Behälters enthält, so dass die Position der Schnittstelle zwischen der schweren Flüssigkeit und der leichten Flüssigkeit in der ersten Kammer sich zwischen dem oberen Rand (9) des unteren Verbindungsdurchgangs (10) und dem oberen Rand (13) des ersten Überlaufs (11) befindet;
und Einrichtungen enthält, um die Drücke im Inneren der inneren Räume zu erfassen, wobei die Einstell- oder Regelungseinrichtung vom Wert der Differenz zwischen diesen Drücken beaufschlagt wird.

2. Vorrichtung nach Anspruch 1, die eine Einstell- oder Regelungseinrichtung der Drücke / Unterdrücke im Inneren der inneren Räume des Behälters enthält.

3. Vorrichtung nach einem der Ansprüche 1 und 2, die eine Erfassungseinrichtung (33) des Pegels der Schnittstelle (IC) zwischen den Flüssigkeiten in der ersten Kammer enthält, und wobei die Einstell- oder Regelungseinrichtung vom von dieser Erfassungseinrichtung bezüglich eines Pegelbezugs gelieferten Signal beaufschlagt wird.

4. Vorrichtung nach einem der Ansprüche 1 oder 2, die eine Erfassungseinrichtung (34, 35) in mindestens einem der Ausgänge einer der Flüssigkeiten in der anderen enthält, und wobei die Einstell- oder Regelungseinrichtung vom von dieser Erfassungseinrichtung gelieferten Signal beaufschlagt wird.

5. Vorrichtung nach einem der vorhergehenden Ansprüche, wobei der dem Raum mit eingestelltem oder geregeltem Druck entsprechende Ausgang der Flüssigkeit mit einer Durchsatz-Einstell- oder Regelungseinrichtung (22, 25) versehen ist, die von einem Signal beaufschlagt wird, das von einer Erfassungseinrichtung des Pegels der freien Fläche dieser Flüssigkeit bezüglich eines Pegelbezugs geliefert wird.

6. Vorrichtung nach einem der vorhergehenden Ansprüche, die mindestens eine Einrichtung zur Einstellung des Durchsatzes in mindestens einem der Ausgänge enthält, die von einem Signal beaufschlagt wird, das von einer Erfassungseinrichtung des Pegels der freien Fläche der Flüssigkeit im entsprechenden Überlauf bezüglich eines Pegelbezugs geliefert wird.

7. Vorrichtung nach einem der vorhergehenden Ansprüche, wobei die Einstell- oder Regelungseinrichtung (28) von den Werten der Dichten der zu trennenden Flüssigkeiten beaufschlagt wird.

## Claims

1. Device for the gravity separation of immiscible liquids of different densities in an emulsion containing at least two liquids, comprising a closed reservoir into which the emulsion is brought via at least one inlet and inside which the emulsion can flow so that the liquids separate at least in part by migrating one on top of the other under the effect of gravity, and comprising, in a zone of the reservoir in which the liquids are at least partially separated, means of extracting the lightest liquid and the heaviest liquid towards corresponding outlets;
in which the reservoir (2, 101, 201) comprises a dividing partition (6, 105, 207-208) delimiting a first chamber (7, 108, 203) into which the said inlet emerges and in which the separation of the liquids takes place and a second chamber (8, 109, 205), this dividing partition creating a lower communication passage (10, 107, 206) between these chambers so that the heaviest liquid flows from the first chamber into the second chamber;
in which the extraction means comprise a first spillway (11) situated in the first chamber and having an upper edge (13, 112, 215) for the lightest liquid to overspill towards a first outlet (14, 121, 222) of the reservoir, and a second spillway (15) situated in the second chamber and having an upper edge (17, 116, 219) for the heaviest liquid to overspill towards a second outlet (18, 117, 223) of the reservoir, the upper edge of the first spillway and the upper edge of the second spillway being situated above the upper edge (9) of the lower communication passage and the upper edge of the second spillway being situated below the upper edge of the first spillway so that the free surfaces (IG1, IG2) of the liquids in the said chambers determine internal spaces (G1, G2) of the reservoir which are separated by the said dividing partition (6, 105, 207-208);
comprising a means (28) of setting or regulating the pressure/depression inside at least one of the said internal spaces (G1, G2) of the reservoir so that the position of the interface between the heavy liquid and the light liquid in the said first chamber is situated between the upper edge (9) of the said lower communication passage (10) and the upper edge (13) of the said first spillway (11) ;
and comprising means for detecting the pressures inside the said internal spaces, the setting or regulating means being subjected to the magnitude of the difference between these pressures.

2. Device according to Claim 1, comprising a means for setting or regulating the pressures/depressions inside the said internal spaces of the reservoir.

3. Device according to one of Claims 1 and 2, comprising a means (33) of detecting the level of the interface (IC) between the liquids in the first chamber and in which the setting or regulating means is subjected to the signal delivered by this detection means with respect to a level reference.

4. Device according to one of Claims 1 and 2, comprising, in at least one of the said outlets, a means (34, 35) of detecting one of the liquids in the other and in which the setting or regulating means is subjected to the signal delivered by this detection means.

5. Device according to any one of the preceding claims, in which the liquid outlet corresponding to the said space that has a set or regulated pressure is equipped with a flow rate setting or regulating means (22, 25) subjected to a signal delivered by a means of detecting the level of the free surface of this liquid with respect to a level reference.

6. Device according to any one of the preceding claims, comprising at least one means for setting the flow rate in at least one of the said outlets, which is subjected to a signal delivered by a means of detecting the level of the free surface of the liquid in the corresponding spillway with respect to a level reference.

7. Device according to any one of the preceding claims, in which the said setting or regulating means (28) is subjected to the values of the densities of the said liquids that are to be separated.
